# EUROPÄISCHE PATENTSCHRIFT

(11) **EP 1 954 522 B1**
(45) Veröffentlichungstag und Bekanntmachung des Hinweises auf die Patenterteilung: **14.07.2010**
(21) Anmeldenummer: 06806598.6
(22) Anmeldetag: 28.10.2006
(51) Int. Cl.: B60N 2/22

(54) **FAHRZEUGSITZ, INSBESONDERE KRAFTFAHRZEUGSITZ**
VEHICLE SEAT, PARTICULARLY MOTOR VEHICLE SEAT
SIEGE DE VEHICULE, EN PARTICULIER SIEGE DE VEHICULE A MOTEUR

(30) Priorität: 02.12.2005 DE 102005057623
(43) Veröffentlichungstag der Anmeldung: 13.08.2008
(73) Patentinhaber: KEIPER GmbH & Co. KG, 67657 Kaiserslautern (DE)
(72) Erfinder: DIEHL, Andreas, 67697 Otterberg (DE); HEEG, Norbert, 66994 Dahn (DE)
(74) Vertreter: Patentanwälte Hosenthien-Held und Dr. Held
(86) Internationale Anmeldenummer: PCT/EP2006/010391
(87) Internationale Veröffentlichungsnummer: WO 2007/062724

(56) Entgegenhaltungen:
- WO-A-2004/043733
- DE-A1- 10 145 746
- DE-A1- 19 629 964
- DE-U1-202005 004 528

## Beschreibung

Die Erfindung betrifft einen Fahrzeugsitz mit den Merkmalen des Oberbegriffs des Anspruches 1.

Es sind zahlreiche Fahrzeugsitze dieser Art bekannt, welche eine freistehende Lehne mit verriegelbaren Beschlägen, wie beispielsweise in der WO 2004/043733 A1 für einen Fahrzeugsitz der eingangs genannten Art beschrieben, oder eine mit der Fahrzeugstruktur verriegelbare Lehne mit zusätzlich verriegelbaren oder als einfache Gelenke ausgebildeten Beschlägen, wie beispielsweise in der DE 196 29 964 A1 beschrieben, aufweisen. Für eine freistehende Lehne ist in der DE 101 45 746 A1, die als nächstliegender Stand der Technik betrachtet wird, ein Sensor zur Bestimmung der Neigung der Lehne beschrieben, welcher mit einem Signalgeber zusammen wirkt, wobei Sensor und Signalgeber axial versetzt zum verriegelbaren Beschlag angeordnet sind.

Der Erfindung liegt die Aufgabe zu Grunde, einen Fahrzeugsitz der eingangs genannten Art hinsichtlich der Funktionsvielfalt und -sicherheit zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, dass am ersten Beschlagteil ein Sensor und am zweiten Beschlagteil ein Signalgeber vorgesehen ist, wobei der Sensor durch Zusammenwirken mit dem Signalgeber ein Signal abgibt, wenn das zweite Beschlagteil relativ zum ersten Beschlagteil schwenkt, wobei mittels des Signals die relative Winkelstellung der Beschlagteile bestimmbar ist, stehen Informationen zur Verfügung, aus denen eine Verriegelbarkeit des Beschlags, die Notwendigkeit einer Synchronisation zweier Beschläge oder das Erreichen einer gewünschten Neigung der Lehne bestimmt und gesteuert werden kann. Ein Verriegeln der Lehne erfolgt mittels des Beschlags, indem ein am ersten Beschlagteil beweglich gelagertes Verriegelungselement und ein am zweiten Beschlagteil vorgesehenes Gegenelement zusammenwirken, wobei sie bei entriegeltem Beschlag voneinander entfernt sind. Je nach Vorhandensein von motorischen Antrieben können diese in die Steuerung einbezogen werden.

Für die freistehenden Lehnen steht bei der Anwendung der Erfindung die Prüfung auf die Verriegelbarkeit des Beschlags im Vordergrund, die Teil einer Synchronisation zweier Beschläge sein kann. Bei dieser Prüfung auf die Verriegelbarkeit wird die Relativstellung zwischen dem Verriegelungselement und dem Gegenelement bestimmt, um die passende Ausrichtung für ein Verriegeln zu prüfen, d.h. ob das Verriegelungselement und das Gegenelement so aufeinander ausgerichtet sind, dass sie sich aufeinander zu bewegen direkt in ihre Stellung zum Zusammenwirken (Eingriffsstellung) gelangen können, um Stellungen Zahn auf Zahn zu vermeiden und damit eine maximale Kraftübertragung zu gewährleisten.

Für ein sinnvoll auflösbares Signal ist der Signalgeber vorzugsweise als periodische Abfolge von unterschiedlichen Bereichen ausgebildet, wobei die Periode die Auflösung definiert. Derartige Bereiche sind vorzugsweise abwechselnd magnetisierte und unmagnetisierte Bereiche oder magnetisierte Bereiche mit abwechselnder Richtung der Magnetisierung. Der Sensor ist dann vorzugsweise als Hallsensor ausgebildet ist. Eine ähnliche Lösung ist für einen Längseinsteller eines Fahrzeugsitzes in der DE 102 29 369 A1 beschrieben. Es sind aber auch optische Lösungen möglich. Der Sensor ist sinnvollerweise an ein Steuergerät angeschlossen, welches die Signale des Sensors auswertet, insbesondere bei jedem Wechsel des Bereichs des Signalgebers einen Puls vom Sensor empfängt, diese Pulse zählt und hieraus die relative Winkelstellung der Beschlagteile zueinander bestimmt.

Ein Verriegeln der Lehne kann kummulativ mittels eines Schlosses und eines mit dem Schloss zusammenwirkenden Schloss-Gegenelements mit der Fahrzeugstruktur erfolgen. Bei den mit der Fahrzeugstruktur verriegelbaren Lehne ist die Prüfung auf die Verriegelbarkeit in Fällen wichtig, in denen eine doppelte

Verriegelung mittels eines derartigen Beschlags und eines Lehnenschlosses erfolgt. Gegebenfalls muss dann die Lehnenneigung korrigiert werden, damit der Beschlag verriegeln kann. Für besagte Lehnen ist es aber auch interessant, die Information über die aktuelle Neigung der Lehne mit einer Abfrage des Verriegelungszustandes des Schlosses zu verknüpfen, um ein korrektes Verriegeln der Lehne zu prüfen.

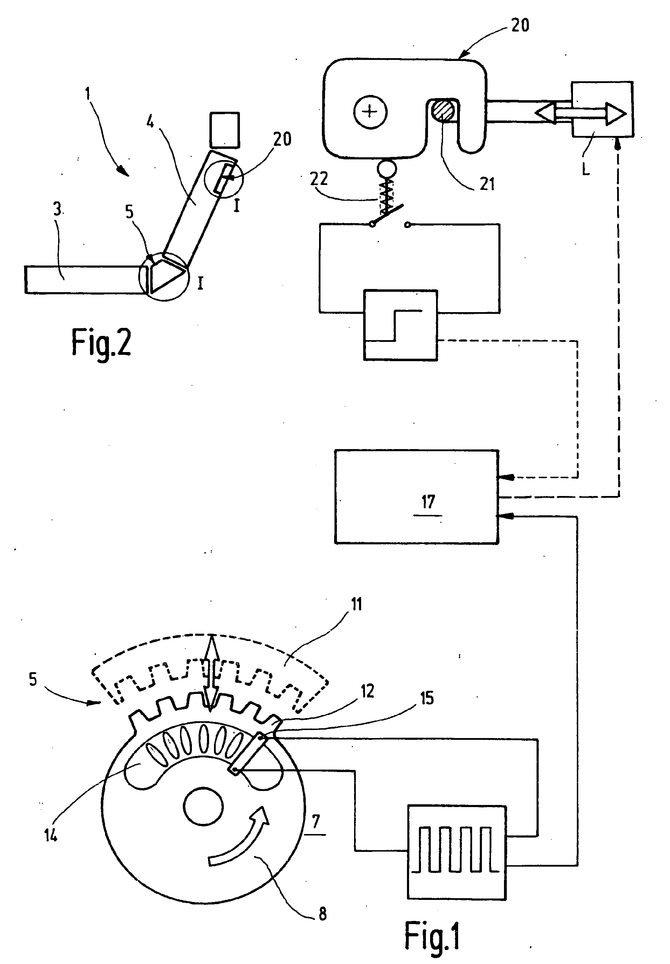

Im folgenden ist die Erfindung anhand eines in der Zeichnung dargestellten Ausführungsbeispiels mit einer Abwandlung näher erläutert. Es zeigen
- Fig. 1: ein Blockschaltbild unter Einbeziehung der in Fig. 2 mit I bezeichneten Bereiche des Ausführungsbeispiels, wobei einige optionale Teile gestri- chelt dargestellt sind, und
- Fig. 2: eine schematische Darstellung des Ausführungsbeispiels.

Ein Fahrzeugsitz 1 eines Kraftfahrzeuges weist ein Sitzteil 3 und eine Lehne 4 auf, welche mittels zweier Beschläge 5 seitlich am Sitzteil 3 angebracht, relativ zu diesem um eine Achse A schwenkbar und vorzugsweise auch mit unterschiedlichen Neigungen einstellbar ist.

Der Beschlag 5 umfasst ein erstes Beschlagteil 7, ein zweites Beschlagteil 8, welches relativ zum ersten Beschlagteil 7 um die Achse A schwenkbar ist, und ein Verriegelungselement 11, welches relativ zum zweiten Beschlagteil 8 beweglich am ersten Beschlagteil 7 gelagert ist. Das Verriegelungselement 11 wirkt zum Verriegeln des Beschlags 5, genauer gesagt der beiden Beschlagteile 7 und 8, mit einem Gegenelement 12 zusammen, welches am zweiten Beschlagteil 8 ausgebildet ist, und kann zum Entriegeln des Beschlags 5 vom Gegenelement 12 zurückgebogen werden, d.h. von letzterem entfernt werden. Vorzugsweise handelt es sich bei dem Gegenelement 12 um einen Zahnkranz, welcher wenigstens über einen Teil des Umfangs des zweiten Beschlagteils 8 hinweg ausgebildet ist, also in der Regel um die Achse A gekrümmt ist. Entsprechend trägt das Verriegelungselement 11 eine passende, d.h. formschlüssig zusammenwirkende, Verzahnung. Die Zuordnung der Beschlagteile 7 und 8 zu Sitzteil 3 und Lehne 4 hängt vom Anwendungsfall und vom jeweils zur Verfügung stehenden Bauraum ab. Im Relativsystem der Beschlagteile 7 und 8 wird in der vorliegenden Beschreibung willkürlich das erste Beschlagteil 7 als stationär und das zweite Beschlagteil 8 als beweglich angesehen.

Bei dem Beschlag 5 kann es sich beispielsweise um einen Rastbeschlag handeln, wie er in der WO 00/44582 A1 beschrieben ist, oder um einen solchen, wie er in der DE 102 35 141 A1 beschrieben ist. Bei beiden Typen nehmen das Verriegelungselement 11 und das Gegenelement 12 verschiedene Relativpositionen ein sowohl zur Neigungseinstellung der Lehne 4 in verschiedenen Gebrauchsstellungen als auch zum Schwenken in Nichtgebrauchsstellungen und gegebenfalls zum Sichern in letzteren. Der Beschlag 5 kann aber auch beispielsweise als ein Getriebebeschlag mit zentrischer Freischwenkung ausgebildet sein, wie er in der DE 102 06 303 A1 beschrieben ist, wobei das zugehörige Exzenterumlaufgetriebe beispielsweise in der DE 44 36 101 A1 ei einem Getriebebeschlag ohne zentrische Freischwenkung beschrieben ist. Es können bei dem letztgenannten Getriebebeschlag auch der zentrale Mitnehmer und das ihn lagernde Beschlagteil als die relativ zueinander schwenkbaren Beschlagteile im erfindungsgemäßen Sinne betrachtet werden. Die Offenbarungsgehalte der genannten Druckschriften werden ausdrücklich einbezogen.

Am zweiten Beschlagteil 8 ist ein Signalgeber 14 vorgesehen, welcher vorliegend als eine in Umfangsrichtung bezüglich der Achse A periodische Abfolge von streifenförmigen, abwechselnd magnetisierten und unmagnetisierten Bereichen (oder magnetisierten Bereichen mit abwechselnder Richtung der Magnetisierung) ausgebildet ist. Die Periode der magnetisierten Bereiche ist höchsten so groß wie die Periode der Zähne des Gegenelementes 12, vorzugsweise halb so groß. Der Signalgeber 14 ist um die Achse A gekrümmt und in einem Abstand zu derselben angeordnet. Am ersten Beschlagteil 7 ist ein Sensor 15 vorgesehen, welcher im gleichen Abstand zur Achse A wie der Signalgeber 14 angeordnet ist. Der Sensor 15 wirkt mit dem Signalgeber 14 zusammen. Vorliegend ist der Sensor 15 als Hallsensor ausgebildet. Anstelle des magnetischen Zusammenwirkens können der Signalgeber 14 und der Sensor 15 in einer abgewandelten Ausführung auch optisch zusammenwirken, beispielsweise der Signalgeber als Abfolge von Streifen unterschiedlicher Reflexionen und der Sensor als Kombination einer Leuchtdiode und einer Photozelle. Der Sensor 15 ist an ein Steuergerät 17 angeschlossen.

Wird nun der Beschlag 5 entriegelt, d.h. das Verriegelungselement 11 und das Gegenelement außer Eingriff gebracht, kann die Lehne 4 relativ zum Sitzteil 3 geschwenkt werden. Eine Neigungseinstellung erfolgt vorzugsweise motorisch, das Schwenken in eine Nichtgebrauchsstellung vorzugsweise manuell. Beim Schwenken der Lehne 4 schwenken auch die Beschlagteile 7 und 8 relativ zueinander. Der Signalgeber 14 wird am Sensor 15 vorbeigeführt. Bei jedem Wechsel der Magnetisierung gibt der Sensor 15 ein Signal ab, genauer gesagt einen Puls, welcher vom Steuergerät 17 gezählt wird. Aus der Anzahl der Pulse wird im Steuergerät 17 die aktuelle relative Winkelstellung der Beschlagteile 7 und 8 zueinander bestimmt, bezogen auf eine definierte Winkelstellung bei einer anfänglichen Initialisierung.

Aus der relativen Winkelstellung der Beschlagteile 7 und 8 können sowohl die Relativstellung von Verriegelungselement 11 und Gegenelement 12 beim vorliegend betrachteten Beschlag 5 als auch die aktuelle Neigung der Lehne 4 bestimmt werden. Mit der ersten Information kann geprüft werden, ob das Verriegelungselement 11 und das Gegenelement 12 passend aufeinander ausgerichtet sind, d.h. ob ein Verriegeln prinzipiell möglich ist. Mit der zweiten Information kann geprüft werden, ob die gewünschte Endstellung (Gebrauchs- oder Nichtgebrauchsstellung) erreicht ist, und dann das Verriegeln aktiviert werden oder andernfalls ein fortgesetztes Schwenken der Lehne 4 erforderlich ist, gegebenenfalls der motorische Antrieb der Lehne 4 weiter betätigt werden muss. Bei längseinstellbaren Fahrzeugsitzen kann gegebenenfalls die Sitzlängsposition verändert werden, wenn der Abstand zur vorderen Sitzreihe zu klein ist. Aus einer Kombination beider Informationen kann eine Synchronisation mit dem Beschlag 5 auf der gegenüberliegenden Fahrzeugsitzseite vorgenommen werden, d.h. durch (zeitlich bzw. winkelmäßig) unterschiedliches Verriegeln der beiden Beschläge 5 ein Winkelversatz zwischen den beiden Beschlägen 5 ausgeglichen werden.

Die Lehne 4 ist vorzugsweise mit einem Schloss 20 versehen, mittels welchem die Lehne 4 mit einem Schloss-Gegenelement 21 an der Fahrzeugstruktur verriegelbar ist. Das Schloss-Gegenelement 21 kann ein Bügel oder Bolzen oder dergleichen sein. Das Schloss-Gegenelement 21 ist vorliegend mittels einer vom Steuergerät 17 betätigbaren Lehnen-Antriebseinheit L relativ zur Fahrzeugstruktur beweglich, beispielsweise linear in Richtung auf das Schloss 20 zu, womit die Neigung der Lehne 4 motorisch einstellbar ist. Bei entriegelten Schloss 20 kann die Lehne 4 in eine Nichtgebrauchsstellung geschwenkt werden. In abgewandelter Ausführung sind die Positionen von Schloss 20 und Schloss-Gegenelement 21 ausgetauscht. In vereinfachter Ausführung fehlt die Lehnen-Antriebseinheit L, d.h. das Schloss-Gegenelement 21 (oder das Schloss 20) ist fest mit der Fahrzeugstruktur verbunden.

Die Erfindung ist im vorliegenden Ausführungsbeispiel ergänzt um eine weitere Abfrage. Ein Schloss-Sensor 22, beispielsweise ein Mikroschalter, fragt den Verriegelungszustand des Schlosses 20 ab, beispielsweise mittels einer Abfrage der Position einer Klinke des Schlosses 20, und gibt ein digitales Signal an das Steuergerät 17 ab. Eine UND-Verknüpfung mit der relativen Winkelstellung der Beschlagteile 7 und 8 oder der aktuellen Neigung der Lehne 4 stellt sicher, dass die Anzeige einer korrekten Verriegelung der Lehne 4 erst erfolgt, wenn das Schloss 20 mit dem Schloss-Gegenelement 21 verriegelt und die richtige Neigung der Lehne 4 vorhanden ist. Wenn eine Lehnen-Einstelleinheit L vorhanden ist, betätigt das Steuergerät 17 mit den Informationen aus dem Sensor 15 die Lehnen-Einstelleinheit L solange, bis die durch die Lehnen-Antriebseinheit L bewegte Lehne 4 die richtige Neigung zum Verriegeln des Beschlags 5 aufweist, d.h. eine passende Ausrichtung des Verriegelungselementes 11 und des Gegenelementes 12 erreicht ist. Es können auch Fehler festgestellt werden, beispielsweise wenn das Schloss 20 zwar geschlossen, aber die Neigung der Lehne 4 außerdem des Neigungseinstellbereiches ist, d.h. das Schloss-Gegenelement 21 sich außerhalb des Schlosses 20 befindet.

### Bezugszeichenliste

- 1: Fahrzeugsitz
- 3: Sitzteil
- 4: Lehne
- 5: Beschlag
- 7: erstes Beschlagteil
- 8: zweites Beschlagteil
- 11: Verriegelungselement
- 12: Gegenelement
- 14: Signalgeber
- 15: Sensor
- 17: Steuergerät
- 20: Schloss
- 21: Schloss-Gegenelement
- 22: Schloss-Sensor
- A: Achse
- L: Lehnen-Antriebseinheit

## Patentansprüche

1. Fahrzeugsitz, insbesondere Kraftfahrzeugsitz, mit einem Sitzteil (3), wenigstens einem Beschlag (5), der ein erstes Beschlagteil (7) und ein relativ zum ersten Beschlagteil (7) um eine Achse (A) schwenkbares zweites Beschlagteil (8) aufweist, und einer mittels des Beschlags (5) am Sitzteil (3) angebrachten und relativ zu diesem um die Achse (A) schwenkbare Lehne (4), welche mittels des Beschlags (5) verriegelbar ist, wobei der Beschlag (5) ein am ersten Beschlagteil (7) beweglich gelagertes Verriegelungselement (11) und ein am zweiten Beschlagteil (8) vorgesehenes, zum Verriegeln des Beschlags (5) mit dem Verriegelungselement (11) zusammenwirkendes Gegenelement (12) aufweist, welche bei entriegeltem Beschlag (5) voreinander entfernt sind, **dadurch gekennzeichnet, dass** am ersten Beschlagteil (7) ein Sensor (15) und am zweiten Beschlagteil (8) ein Signalgeber (14) vorgesehen ist, wobei der Sensor (15) durch Zusammenwirken mit dem Signalgeber (14) ein Signal abgibt, wenn das zweite Beschlagteil (8) relativ zum ersten Beschlagteil (7) schwenkt, wobei mittels des Signals die relative Winkelstellung der Beschlagteile (7, 8) bestimmbar ist, wobei der Sensor (15) an ein Steuergerät (17) angeschlossen ist, welches die Signale des Sensors (15) auswertet, und wobei das Steuergerät (17) die Relativstellung von Verriegelungselement (11) und Gegenelement (12) bestimmt, um die passende Ausrichtung für ein Verriegeln zu prüfen.

2. Fahrzeugsitz nach Anspruch 1, **dadurch gekennzeichnet, dass** der Signalgeber (14) als periodische Abfolge von unterschiedlichen Bereichen ausgebildet ist.

3. Fahrzeugsitz nach Anspruch 2, **dadurch gekennzeichnet, dass** der Signalgeber (14) als periodische Abfolge von abwechselnd magnetisierten und unmagnetisierten Bereichen oder von magnetisierten Bereichen mit abwechselnder Richtung der Magnetisierung ausgebildet ist, während der Sensor (15) als Hallsensor ausgebildet ist.

4. Fahrzeugsitz nach Anspruch 2 oder 3, **dadurch gekennzeichnet, dass** der Sensor (15) bei jedem Wechsel des Bereichs des Signalgebers (14) einen Puls als Signal abgibt, und dass das Steuergerät (17) die Pulse zählt und die relative Winkelstellung der Beschlagteile (7, 8) bestimmt.

5. Fahrzeugsitz nach einem der vorhergehenden Ansprüche, **dadurch gekennzeichnet, dass** das Steuergerät (17) aus der relativen Winkelstellung der Beschlagteile (7, 8) die aktuelle Neigung der Lehne (4) bestimmt, insbesondere um zu prüfen, ob die gewünschte Endstellung erreicht ist.

6. Fahrzeugsitz nach einem der vorhergehenden Ansprüche, **dadurch gekennzeichnet, dass** auf jeder Fahrzeugsitzseite ein Beschlag (5) mit Signalgeber (14) und Sensor (15) vorgesehen ist, und dass das Steuergerät (17) das Verriegeln der beiden Beschläge (5) in der gewünschten Endstellung synchronisiert.

7. Fahrzeugsitz nach einem der vorhergehenden Ansprüche, **dadurch gekennzeichnet, dass** die Lehne (4) mittels eines Schlosses (20) und eines mit dem Schloss (20) zusammenwirkenden Schloss-Gegenelemen (21) mit der Fahrzeugstruktur verriegelbar ist.

8. Fahrzeugsitz nach Anspruch 7, **dadurch gekennzeichnet, dass** das Schloss-Gegenelement (21) oder das Schloss (20) mittels einer Lehnen-Antriebseinheit (L) relativ zur Fahrzeugstruktur beweglich ist.

9. Fahrzeugsitz nach Anspruch 8, **dadurch gekennzeichnet, dass** zum Verriegeln des Beschlags (5) das Steuergerät (17) die Lehnen-Antnebseinheit (L) solange betätigt, bis das Verriegelungselement (11) und das Gegenelement (12) passend ausgerichtet sind.

10. Fahrzeugsitz nach Anspruch 7 bis 9, **dadurch gekennzeichnet, dass** das Schloss (20) einen Schloss-Sensor (22) zur Abfrage des Verriegelungszustandes aufweist.

11. Fahrzeugsitz nach Anspruch 5 und 10, **dadurch gekennzeichnet, dass** das Streuergerät (17) die Informationen über die aktuelle Neigung der Lehne (4) und den Verriegelungszustand des Schlosses (20) verknüpft, um eine korrekte Verriegelung der Lehne (4) erst anzuzeigen, wenn das Schloss (20) mit dem Schloss-Gegenelement (21) verriegelt und die zur gewünschten Endstellung gehörige Neigung der Lehne (4) vorhanden ist.

## Claims

1. A vehicle seat, particularly motor vehicle seat, with a seat part (3), at least one fitting (5) which has a first fitting part (7) and a second fitting part (8) which is pivotable about an axis (A) relative to the first fitting part (7), and a backrest (4) which is attached by means of the fitting (5) to the seat part (3) and is pivotable about the axis (A) relative to the latter, and which can be locked by means of the fitting (5), the fitting (5) having a locking element (11) mounted movably on the first fitting part (7) and a mating element (12) which is provided on the second fitting part (8) and interacts with the locking element (11) in order to lock the fitting (5), said locking element and mating element being moved away from each other when the fitting (5) is released, **characterized in that** a sensor (15) is provided on the first fitting part (7) and a signal transmitter (14) is provided on the second fitting part (8), the sensor (15) outputting a signal, by interaction with the signal transmitter (14), when the second fitting part (8) pivots relative to the first fitting part (7), said signal making it possible to determine the relative angular position of the fitting parts (7, 8), said sensor being connected to a control unit (17) which evaluates the signals of the sensor (15), said control unit (17) determining the relative position of locking element (11) and mating element (12) in order to check that they are appropriately aligned for locking to take place.

2. The vehicle seat as claimed in claim 1, **characterized in that** the signal transmitter (14) is designed as a periodic sequence of different regions.

3. The vehicle seat as claimed in claim 2, **characterized in that** the signal transmitter (14) is designed as a periodic sequence of alternating magnetized and non-magnetized regions or of magnetized regions with an alternating direction of magnetization, while the sensor (15) is designed as a Hall sensor.

4. The vehicle seat as claimed in claim 2 or 3, **characterized in that**, upon each change of the region of the signal transmitter (14), the sensor (15) outputs a pulse as a signal, and **in that** the control unit (17) counts the pulses and determines the relative angular position of the fitting parts (7, 8).

5. The vehicle seat as claimed in one of the preceding claims, **characterized in that** the control unit (17) determines the current inclination of the backrest (4) from the relative angular position of the fitting parts (7, 8), in particular in order to check whether the desired final position has been reached.

6. The vehicle seat as claimed in one of the preceding claims, **characterized in that** one fitting (5) with signal transmitter (14) and sensor (15) is provided on each side of the vehicle seat, and **in that** the control unit (17) synchronizes the locking of the two fittings (5) in the desired final position.

7. The vehicle seat as claimed in one of the preceding claims, **characterized in that** the backrest (4) can be locked to the vehicle structure by means of a lock (20) and a mating lock element (21) which interacts with the lock (20).

8. The vehicle seat as claimed in claim 7, **characterized in that** the mating lock element (21) or the lock (20) is movable relative to the vehicle structure by means of a backrest drive unit (L).

9. The vehicle seat as claimed in claim 8, **characterized in that**, in order to lock the fitting (5), the control unit (17) actuates the backrest drive unit (L) until the locking element (11) and the mating element (12) are appropriately aligned.

10. The vehicle seat as claimed in claims 7 to 9, **characterized in that** the lock (20) has a lock sensor (22) for interrogation of the locking state.

11. The vehicle seat as claimed in claims 5 and 10, **characterized in that** the control unit (17) links the information about the current inclination of the backrest (4) and the locking state of the lock (20) in order to indicate correct locking of the backrest (4) only if the lock (20) is locked to the mating lock element (21) and the backrest (4) is at the inclination associated with the desired final position.

## Revendications

1. Siège de véhicule, en particulier siège de véhicule automobile, comprenant une partie de siège (3), au moins une armature (5), qui comprend une première partie d'armature (7) et une seconde partie d'armature (8) apte à pivoter autour d'un axe (A) par rapport à la première partie d'armature (7), et un dossier (4) monté au moyen de l'armature (5) sur la partie de siège (3) et apte à pivoter par rapport à celle-ci autour de l'axe (A), lequel dossier est verrouillable au moyen de l'armature (5), l'armature (5) comprenant un élément de verrouillage (11) monté de façon mobile sur la première partie d'armature (7) et un contre-élément (12) prévu sur la deuxième partie d'armature (8) et coopérant avec l'élément de verrouillage (11) pour verrouiller l'armature (5), lesquels sont éloignés l'un de l'autre lorsque l'armature (5) est déverrouillée, **caractérisé par le fait qu'**il est prévu un capteur (15) sur la première partie d'armature (7) et un transmetteur de signaux (14) sur la deuxième partie d'armature (8), le capteur (15) émettant un signal en coopérant avec le transmetteur de signaux (14) lorsque la deuxième partie d'armature (8) pivote par rapport à la première partie d'armature (7), la position angulaire relative des parties d'armature (7, 8) étant déterminable au moyen du signal, le capteur (15) étant relié à un appareil de commande (17), lequel analyse les signaux du capteur (15), et l'appareil de commande (17) déterminant la position relative de l'élément de verrouillage (11) et du contre-élément (12), pour contrôler l'alignement convenable pour un verrouillage.

2. Siège de véhicule selon la revendication 1, **caractérisé par le fait que** le transmetteur de signaux (14) est réalisé comme une suite périodique de domaines différents.

3. Siège de véhicule selon la revendication 2, **caractérisé par le fait que** le transmetteur de signaux (14) est réalisé comme une suite périodique de domaines en alternance magnétisés et non magnétisés ou de domaines magnétisés avec une direction alternante de magnétisation, tandis que le capteur (15) est un capteur à effet Hall.

4. Siège de véhicule selon l'une des revendications 2 ou 3, **caractérisé par le fait que** le capteur (15) émet à chaque changement de domaine du transmetteur de signaux (14) un signal sous forme d'impulsion, et que l'appareil de commande (17) compte les impulsions et détermine la position angulaire relative des parties d'armature (7, 8).

5. Siège de véhicule selon l'une des revendications précédentes, **caractérisé par le fait que** l'appareil de commande (17) détermine à partir de la position angulaire relative des parties d'armature (7, 8) l'inclinaison actuelle du dossier (4), en particulier pour vérifier si la position finale souhaitée est atteinte.

6. Siège de véhicule selon l'une des revendications précédentes, **caractérisé par le fait que**, sur chaque côté du siège de véhicule, il est prévu une armature (5) comprenant un transmetteur de signaux (14) et un capteur (15), et que l'appareil de commande (17) synchronise le verrouillage des deux armatures (5) dans la position finale souhaitée.

7. Siège de véhicule selon l'une des revendications précédentes, **caractérisé par le fait que** le dossier (4) est verrouillable avec la structure de siège de véhicule au moyen d'une serrure (20) et d'un contre-élément de serrure (21) coopérant avec la serrure (20).

8. Siège de véhicule selon la revendication 7, **caractérisé par le fait que** le contre-élément de serrure (21) ou la serrure (20) est mobile par rapport à la structure de siège de véhicule au moyen d'une unité d'entraînement de dossier (L).

9. Siège de véhicule selon la revendication 8, **caractérisé par le fait qu'**afin de verrouiller l'armature (5), l'appareil de commande (17) actionne l'unité d'entraînement de dossier (L) jusqu'à ce que l'élément de verrouillage (11) et le contre-élément (12) soient alignés convenablement.

10. Siège de véhicule selon l'une des revendications 7 à 9, **caractérisé par le fait que** la serrure (20) comprend un capteur de serrure (22) pour interroger l'état de verrouillage.

11. Siège de véhicule selon l'une des revendications 5 et 10, **caractérisé par le fait que** l'appareil de commande (17) combine les informations sur l'inclinaison actuelle du dossier (4) et sur l'état de verrouillage de la serrure (20), pour indiquer un verrouillage correct du dossier (4) uniquement si la serrure (20) est verrouillée avec le contre-élément de serrure (21) et l'inclinaison de dossier (4) correspondant à la position finale souhaitée est atteinte.
